# EUROPÄISCHE PATENTSCHRIFT

(11) **EP 1 993 863 B1**
(45) Veröffentlichungstag und Bekanntmachung des Hinweises auf die Patenterteilung: **16.03.2011**
(21) Anmeldenummer: 07703078.1
(22) Anmeldetag: 26.01.2007
(51) Int. Cl.: B60H 1/00, F25B 45/00

(54) **SERVICE-GERÄT FÜR FAHRZEUGKLIMAANLAGEN SOWIE VORRATSBEHÄLTER FÜR EINE SOLCHES SERVICE-GERÄT SOWIE VERFAHREN ZUM WARTEN EINER FAHRZEUGKLIMAANLAGE**
SERVICE DEVICE FOR VEHICLE AIR CONDITIONING SYSTEMS AND RESERVOIR VESSELS FOR SUCH A SERVICE DEVICE AND METHOD FOR SERVICING A VEHICLE AIR-CONDITIONING SYSTEM
APPAREIL D'ENTRETIEN POUR CLIMATISEUR DE VEHICULE, RESERVOIR POUR UN TEL APPAREIL D'ENTRETIEN ET PROCEDE D'ENTRETIEN DE CLIMATISEUR DE VEHICULE

(30) Priorität: 27.01.2006 DE 202006001377 U
(43) Veröffentlichungstag der Anmeldung: 26.11.2008
(73) Patentinhaber: Waeco International GmbH, 48282 Emsdetten (DE)
(72) Erfinder: ESCH, Franz-Josef, 48477 Hörstel (DE)
(74) Vertreter: Schumacher, Horst
(86) Internationale Anmeldenummer: PCT/EP2007/000700
(87) Internationale Veröffentlichungsnummer: WO 2007/085480

(56) Entgegenhaltungen:
- EP-A- 0 585 908
- DE-A1- 19 745 538
- DE-U1- 9 110 742
- FR-A- 2 879 182
- US-A- 5 161 385
- US-A- 5 953 923

## Beschreibung

### TECHNISCHES GEBIET

Die Erfindung betrifft eine Vorrichtung gemäß dem Oberbegriff von Anspruch 1, einen Vorratsbehälter gemäß dem Oberbegriff von Anspruch 6 sowie ein Serviceverfahren nach Anspruch 9.

### TECHNISCHER HINTERGRUND

Service-Geräte für Fahrzeugklimaanlagen dienen unter anderem dazu, den Kältemittelkreislauf von Fahrzeugklimaanlagen von Zeit zu Zeit zu entleeren und eine neue Kältemittelfüllung einzubringen. Dabei ist es erforderlich genaue Mengen und Kältemittelspezifikationen einzuhalten. Außerdem muss in vielen Fällen Schmieröl für den Kompressor des Kältemittelkreislaufs der Fahrzeugklimaanlage entfernt und wieder nachgefüllt werden. Auch dies erfolgt in vom Fahrzeugtyp bzw. Klimagerätetyp abhängigen Mengen und Spezifikationen. Manche Fahrzeugklimaanlagen benötigen außerdem ein Additiv für den Kältemittelkreislauf, welches bei einem Wartungsservice ebenfalls ganz oder teilweise ausgetauscht wird. Üblicherweise gelangt das Kompressorenöl in den Kältemittelkreislauf und wird beim Betrieb der Fahrzeugklimaanlagen daher mit umgepumpt. Nur ganz bestimmte Paarungen von Kältemittel und Kompressorenöl sind für diesen Zweck miteinander verträglich. Um nach dem Absaugen des Kältemittel/Kompressorenölgemisches zumindest einen Teil des Kältemittels zur Wiederverwendung zurückgewinnen zu können, weisen Service-Geräte für Fahrzeugklimaanlagen üblicherweise auch einen Separator auf, mit welchem Kältemittel aus dem Kältemittel/Kompressorenölgemisch zur Wiederverwendung abgetrennt werden kann. Gebrauchtes Kompressorenöl sowie, gegebenenfalls, gebrauchtes Additiv wird/werden in der Regel durch das Service-Gerät aufgefangen, um später verworfen zu werden.

Bei bekannten Service-Geräten für Fahrzeugklimaanlagen werden für Kompressorenöl und gegebenenfalls für Additive nachfüllbare Kunststoffbehälter verwendet, aus denen über Unterdruck die notwendige Menge an Kompressorenöl bzw. Additiv ansaugt wird, um sie der Fahrzeugklimaanlage beim Wiederbefüllvorgang in der erforderlichen Menge zuzuführen. Die dabei zur notwendigen Belüftung des Vorratsbehälters zugeführte Atmosphärenluft enthält stets eine gewisse Feuchtigkeitsmenge. Das Kompressorenöl bzw. Additiv kommt somit mit Wasserdampf in Kontakt. Hierdurch kann Wasserdampf in den Kältemittelkreislauf der Fahrzeugklimaanlage gelangen, was schädlich ist. Selbst wenn dem Vorratsbehälter zum Druckausgleich ein Inertgas zugeführt wird, kann Wasserdampf in das Kompressorenöl gelangen, weil der Wasserdampf durch die Wand des Kunststoffbehälters diffundieren kann. In der Vergangenheit war es daher erforderlich, die Mengen an Kompressoröl bzw. Additiv in den entsprechenden Vorratsbehältern vergleichsweise klein zuhalten, damit das Kompressoröl vergleichsweise schnell verbraucht wurde.

Die US 5,953,923 A beschreibt eine Schnellbefüllvorrichtung, insbesondere für Kältemittel mit genauer Dosierung. Ein bei jedem Befüllzykluswieder auftankbarer Dosierbehälter, wird von einem Vorratsbehälter hierzu zyklisch gespeist. Das Kältemittel wird in einer Druckfestkammer aufgenommen. Diese Druckhammer ist durch eine elastische Membran in einen Kältemittelaufnahmeraum und einen Druckerzeugungsraum unterteilt, welch letzterer mit einem Vorratsbehälter für Druckmedium fluidisch verbunden ist. Das Druckgas kann das zu dosierende Kältemittel aus dem Kältemittelaufnahmeraum aufgrund der Elastizität der Membranen gezielt und schnell verdrängen. Die Membran kann als Folienbeutel derart gestaltet sein, dass sie die Funktion eines Verdrängungskolbens für das außerhalb des Folienbeutels aber innerhalb der Druckfestkammer sich befindende Kältemittel übernimmt.

Die US 5,161,385 A beschreibt ein Verfahren zum Widerverwenden von Kältemittel, das ölfrei in einem flexiblen Membranbehälter zwischenlagerbar ist. Das Dokument bezieht sich auf die Problematik, Kältemittel wiederzugewinnen, zu reinigen, zwischen zu lagern und in seiner Gasphase bei niedrigem Druck und Umgebungstemperatur zu handhaben.

Die DE 91 10 742 U1 befasst sich mit dem Aufbewahren von Gefahrgutflüssigkeiten, wie Säuren, Laugen, brennbaren und gesundheitsgefährlichen Stoffe und dergleichen in Tank- und Sicherheitsbehältem. Zwar sieht das Dokument vor, den Kontakt der aufbewahrten Flüssigkeit mit Außenluft zu vermeiden und das Folienmaterial auf den jeweils verwendeten Stoff abzustimmen. Es geht bei der Vermeidung eines Kontaktes mit der Außenluft aber um den Schutz des Endverbrauchers, der die Flüssigkeit in Kleingebinde abfüllt.

### DIE ERFINDUNG

Die Erfindung löst das Problem, Service-Geräte für Fahrzeugklimaanlagen komfortabler bedienen zu können, indem vergleichsweise große Vorratsmengen an Kompressoröl bzw. Additiv in den entsprechenden Vorratsbehälter gelagert werden können, ohne dass das bevorratete Produkt während der Bevorratungsperiode qualitätsmäßige Einbußen erleidet.

Zur Lösung dieser Aufgabe wird eine vorrichtung mit den Merkmalen des Anspruchs 1 ein Vorratsbehälter mit den Merkmalen des Anspruchs 6 sowie ein Serviceverfahren nach Anspruch 9 vorgeschlagen. Demnach besteht ein erfindungsgemäßer Vorratsbehälter aus einem Folienbeutel zum Aufnehmen des Kompressorenöls oder des Additivs und einem den Folienbeutel umhüllenden Schutzbehälter, wobei die Wandungen des Folienbeutels aus einer mit einer Diffusionssperre versehenen Folie, insbesondere aus einer außen mit einer Diffusionssperre beschichteten Kunststofffolie besteht und der zwischen der Beutelaußenseite und der Schutzbehälterinnenseite verfügbare Raum über mindestens eine Öffnung mit der Umgebungsatmosphäre oder mit einem anderen Gas in Strömungsverbindung steht. Auf diese Weise wird das bevorratete Gut (Vorratsgut) optimal geschützt, wobei die Diffusionssperre, vorzugsweise eine Metallbeschichtung, insbesondere aus Aluminium, auch bei Langzeitaufbewahrungen das Vorratsgut qualitätsmäßig nicht leidet, insbesondere keinen Wasserdampf eintreten lässt. Ein mit Diffusionssperre versehener Folienbeutel im Sinne der Erfindung kann demnach ein- und mehrschichtig sein. Die Diffusionssperre kann z.B. in die Matrix des Folienbeutelmaterials eingearbeitet sein. In der Regel wird die Diffusionssperre allerdings als Beschichtung oder kaschierte Folie auf einer weiteren Folie, insbesondere aus Kunststoff, aufgebracht sein. Durch die Gestaltung als Folienbeutel kann derselbe frei von jeglicher Gasatmosphäre im Inneren gehalten werden. Beim Absaugen von Kompressorenöl oder Additiv kollabiert der Folienbeutel.

Durch das erfindungsgemäße Wartungsverfahren (Serviceverfahren) wird unter anderem ein exaktes, dem Bedarf der jeweiligen Fahrzeugklimaanlage an Kreisläufgemisch für den geschlossenen Kältemittelkreislauf entsprechendes Hinzudosieren von Kreislaufgemisch im Servicefalle erreicht. Qualitätseinbußen oder übermäßiger Verbrauch an den zum Teil kostspieligen Bestandteilen des Kreislaufgemisches entfallen weitgehend. Dabei ist es grundsätzlich möglich, das Verfahren im Bedarfsfalle auch ohne Trennung des Kältemittels von dem abgesaugten Kreislaufgemisch im Sinne der Erfindung durchzuführen, und gegebenenfalls auch auf die gewichtsmäßige Erfassung der Nicht-Kältemittel-Komponente des Kreislaufgemisches zu verzichten. Bevorzugt wird allerdings auch das von dem abgesaugten Kreislaufgemisch, z.B. durch Verdampfen abgetrennte Kältemittel in einem als Kältemittelvorrat ausgebildeten Druckbehälter, insbesondere unter Gewichtserfassung, gesammelt, wobei für diesen Kreislaufgemisch-Bestandteil, also das Kältemittel, kein kollabierender Folienbeutel wie für die anderen Bestandteile des Kreislaufgemisches verwendet wird.

Für einen weitgehend automatischen Ablauf des erfindungsgemäßen Wartungsverfahrens können Daten, die für die betreffende Fahrzeugklimaanlage bzw. das betreffende Fahrzeug charakteristisch sind, wie Füllmengen, Mischungsverhältnisse, Auswahl bestimmter Kompressorenöle und/oder Additive, in einen Datenspeicher des Servicegerätes eingegeben und das Absaugen von Kreislaufgemisch aus dem geschlossenen Kältemittelkreislauf der Fahrzeugklimaanlage, die Gemischaufbereitung und Wägungen automatisch durchgeführt. Ebenso können die sich, gegebenenfalls durch Soll/Ist-Vergleiche, ergebenden Mengen an Kältemitteln, Kompressorenöl und gegebenenfalls bestimmten Additiven über mindestens eine ventilgesteuerte Dosiereinheit unter Wägen der Einzelkomponenten dem Kältemittelkreislauf der Fahrzeugklimaanlage automatisch wieder zugeführt werden.

Um eine Restentleerung zu gewährleisten, ist im Inneren des Folienbeutels ein mit Wanddurchbrechungen versehener Entleerkanal vorgesehen, wie ein Spiralkörper.

Der äußere Schutzbehälter schützt den Folienbeutel vor Beschädigungen. Außerdem übt er eine Sicherheitsfunktion aus, wenn nämlich durch eine etwaige Ventilfehlschaltung unter Druck stehendes Medium, wie Kältemittel in den Folienbeutel einströmen kann. Ein Zerplatzen des Folienbeutels wird dann durch den umgebenden Sicherheitsbehälter vermieden. Der Schutzbehälter hat in der Regel eine geschlossene Außenwand mit einem Loch oder wenigen Löchern für Gaszutritt, was die Entstehung eines Unterdruckes beim Absaugen des Vorratsgutes aus dem Folienbeutel verhindert. Grundsätzlich ist es aber auch möglich, eine Gitterstruktur oder ähnliches als Schutzbehälter zu verwenden.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel eines Service-Gerätes dargestellt ist.

In der Zeichnung zeigen
- Fig. 1: ein Blockschaltbild eines Service-Gerätes für eine Fahrzeugklimaanlage;
- Fig. 2: einen Vorratsbehälter für Kompressorenöl oder Additive für ein Service-Gerät für eine Fahrzeugklimaanlage im schematisierten Längsschnitt.
- Fig. 3: eine vergrößerte Schnittansicht eines Vorratsbehälters - ausschnittsweise - so- wie
- Fig. 4: eine weitere Schnittansicht des Folienbeutels - ausschnittsweise.

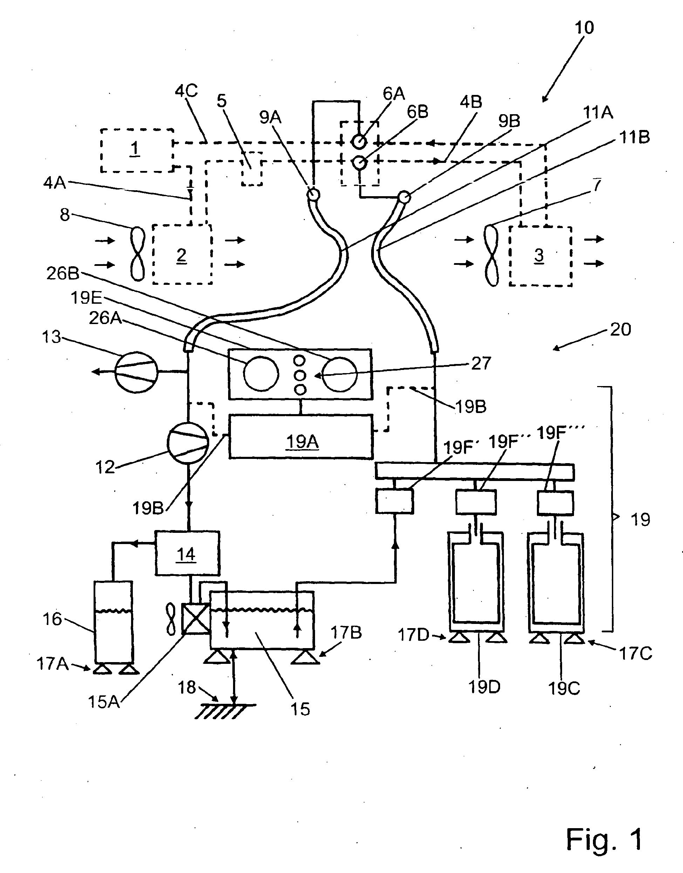

Das Blockschaltbild nach Figur 1 zeigt in durchgezogener Linie die wesentlichen Bestandteile des erfindungsgemäßen Service-Gerätes für eine Fahrzeugklimaanlage und in gestrichelten Linien eine zu wartende Fahrzeugklimaanlage. Letztere besteht aus einem ölgeschmierten Kompressor 1, einem Verflüssiger 2, einen Verdampfer 3, sowie zwischen diesen Komponenten, ein geschlossenes Kühlmittelsystem herstellenden Rohrleitungen 4A-4C. Ferner ist ein Trockner 5 vorgesehen, der auch als Sammler oder Reservoir für Kältemittel dienen kann. Schließlich sind für den Fluidaustausch zwei Serviceanschlüsse 6a/6b in den Kältemittelkreislauf eingebaut. Die am Verdampfer 3 zur Verfügung stehende Kälte wird durch ein Kaltluftgebläse 7 ab- und dem Fahrzeuginnenraum zugeführt. Die Kondensationswärme des Verflüssigers 2 wird durch ein Warmluftgebläse 8 abtransportiert. Service-Anschluss-Verbinder 9A und 9B gestatten es, im Wartungsfalle Kältemittel/Kompressoröl-Gemisch an den Serviceanschlüssen 6A, 6B abzuziehen bzw. aufzufüllen. Die insgesamt mit 10 bezifferte Fahrzeugklimaanlage unterscheidet sich von Fahrzeugtyp zu Fahrzeugtyp und ist nicht Gegenstand der vorliegenden Erfindung.

Ein insgesamt mit 20 bezeichnetes Servicegerät für eine Fahrzeugklimaanlage weißt flexible Druckschläuche 11A, 11 B zum Verbinden des Servicegerätes 20 mit der Fahrzeugklimaanlage 10 über die Service-Anschlussverbinder 9A, 9B an den Serviceanschlüssen 9A, 9B auf. Eine für Kältemittelkompressoren ausgebildete Absaugpumpe 12 fördert gebrauchtes Kältemittel/Kompressoröl-Gemisch über den Druckschlauch 11A und führt es einem Separator 14 zu. Dieser trennt durch Verdampfen Kältemittel aus dem abgesaugten Gemisch ab und führt dies einem als Druckbehälter ausgebildeten Kältemittelvorrat 15 zu. Im Separator 14 abgeschiedenes Kompressoröl/Additiv-Gemisch wird in einem austauschbaren Altölbehälter 16 aufgefangen und mittels einer Wägeeinrichtung 17A gewichtsmäßig erfaßt. Mit dem Kältemittelvorrat 15 ist ein luftgekühlter Kältemittelverflüssiger 15A fest verbunden. Damit wird rückgeführtes Kältemittel überwiegend in flüssiger Form dem Kältemittelvorrat 15 zugeführt. Der gesamte Kältemittelvorrat samt Verflüssiger ruht auf einer weiteren Wägeeinrichtung 17B zum Erfassen des zu- und abgeführten sowie des vorrätigen Kältemittels. Der Kältemittelvorrat und -verflüssiger kann mittels einer Entlastungseinrichtung 18 durch z.B. Anheben und Absenken bzw. Kippen von der Wägeeinrichtung 17B geringfügig beabstandet werden kann. Eine Vakuumpumpe 13 sorgt nach dem Absaugen des gebrauchten Gemisches für den für das Wiederbefüllen erforderlichen Unterdruck im Kreislauf der Fahrzeugklimaanlage.

Ein insgesamt mit 19 bezeichnetes Wiederauffüllsystem besteht im wesentlichen aus austauschbaren Vorratsbehältern 19D für Kompressoröl und 19C für Additive, einer Steuereinheit 19A mit Ventilblock und Steuerleitungen 19B, einer Fernanzeige 19E sowie Dosier- und Ventileinheiten 19F' bis 19F"'. Die Vorratsbehälter 19C und 19D sind bevorzugt wägbar. Hierzu dienen weitere Wägeeinrichtungen 17C, 17D.

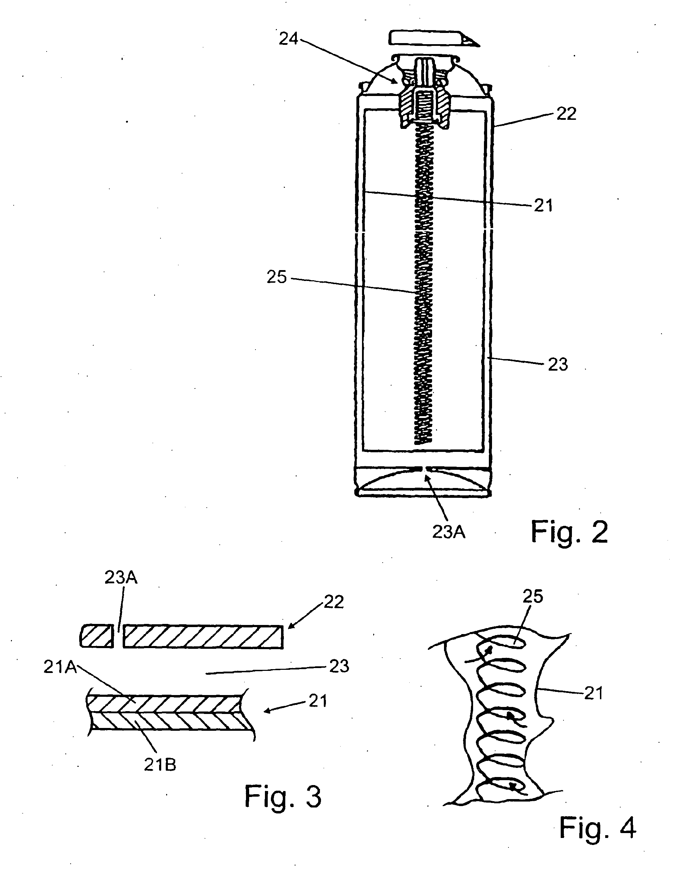

Aus Figur 2 ist der prinzipielle Aufbau der Vorratsbehälter 19C oder 19D ersichtlich: Das Vorratsgut befindet sich in einem Folienbeutel 21, z.B. aus einem zwei - oder mehrlagigen Laminat, dessen innere, auch als Tragschicht dienende Laminatschicht aus einem geeigneten Kunststoff, wie Polyethylen und dessen äußere Laminatschicht aus einer Sperrschicht, z.B. einer Metallfolie insbesondere aus Aluminium besteht und außen beschichtet sowie über eine Zwischenschicht mit der Tragschicht verbunden sein kann. Sperrschicht 21 A kann auf die innen liegende Kunststoffschicht 21 B auch aufgedampf sein. Sowohl die eine als auch die andere Schicht kann als Tragschicht der anderen dienen. Ebenso können beide/alle Schichten auch gemeinsam die die mechanischen Eigenschaften festlegende Tragschicht bilden. Sie sind bevorzugt flächig miteinander verbunden. Typische Wandstärken des Folienbeutels liegen zwischen 2,0 und 0,02 mm und vorzugsweise zwischen 0,5 und 0,05 mm. In jedem Fall sind Materialeigenschaft und Form des Folienbeutels so ausgewählt, dass dieser bei der Entnahme von Vorratsgut allmählich kollabiert. Es wird also keine gasförmige Komponente in das Beutelinnere geleitet. Auf seiner Außenseite ist der Folienbeutel 21 von einem Schutzbehälter 22 umgeben, der ausreichende Festigkeit besitzt, um den Folienbeutel 21 vor äußeren mechanischen Einflüssen zu schützen. Er stellt gleichzeitig einen Schutz gegen das Zerbersten des Folienbeutels bei Überdruck dar. Der zwischen der Außenseite des Folienbeutels 21 und der Innenseite des Schutzbehälters 22 verbleibende Raum 23 ist über mindestens eine Ventilationsöffnung 23A im Schutzbehälter 22 mit einer nicht unter Druck stehenden Atmosphäre, wie der Außenluft verbunden, sodass sich der Raum 23 beim Kollabieren des Folienbeutels 21 in Folge von Vorratsgutentnahme entsprechend vergrößert (vgl. auch Fig. 3). Der Vorratsbehälter 19C, 19D verfügt über ein steuerbares Entleerventil 24, dass in dem Ausführungsbeispiel mittig im Kopf des zylindrischen Schutzbehälters 22 gehalten ist und über geeignete Abdichtungen mit einer Mündungsöffnung des Folienbeutels 21 dicht verbunden ist.

Ein perforierter Entleerkanal 25 schließt sich an die Entleermündung des Folienbeutels an und wird an dem Entleerventil 24 dichtend gehalten. Er erstreckt sich in dem Ausführungsbeispiel etwa mittig innerhalb des Folienbeutels entlang dessen Längserstreckung annähernd bis zum Beutelboden und besteht in dem Ausführungsbeispiel aus einem spiralfederförmigen oder gitterartigen zylindrischen Bauteil mit einem innen liegenden Entleerkanal, der aufgrund der Spiral- oder Gittergestaltung mit dem übrigen Innenraum des Folienbeutels in Strömungsverbindung steht. Beim Kollabieren des Folienbeutels in Folge der Vorratsgutentnahme wird so der Entleerkanal bis zum Ende der möglichen Produktentnahme freigehalten, wobei die beim Absaugen von Vorratsgut entstehenden Strömungswiderstände bis zum Ende der Entleerung im wesentlichen konstant bleiben. Durch geeignete Adaptierung sind die Vorratsbehälter 19B, 19C im Service-Gerät jederzeit austauschbar. Das Vorratsgut wird auch über längere Nutzungs- und Stillstandsperioden des Service-Gerätes ohne nennenswerte Qualitätseinbußen verbleiben, da der Beutelinhalt von der Umgebungsatmosphäre vollständig abgeschirmt ist.

Figur 4 zeigt von einem Folienbeutel einen Zustand kurz vor der völligen Entleerung sein, d.h. in einem bereits deutlich kollabierten Zustand.

### Bezugszeichenliste:

- 1: Kompressor
- 2: Verdampfer
- 3: Verflüssiger
- 4A-C: Rohrleitungen
- 5: Abscheider
- 6A/B: Serviceanscrhlüsse
- 7: Kaltluftgebläse
- 8: Warmluftgebläse
- 9A/B: Service-Anschlussverbinder
- 10: Fahrzeugklimaanlage
- 11A/B: Druckschläuche
- 12: Absaugpumpe
- 13: Vakuumpumpe
- 14: Separator
- 15: Kältemittelvorrat
- 15A: Kältemittelverflüssiger
- 16: Altölbehälter
- 17A-J: Wägeeinrichtungen
- 18: Entlastungseinrichtung
- 19: Wiederauffüllsystem
- 19A: Steuereinheit mit Ventilblock
- 19B: Steuerleitungen
- 19C: Vorratsbehälter
- 19D: Vorratsbehälter
- 19E: Fernanzeige
- 19F': Dosier- und Ventileinheit
- 19F": Dosier- und Ventileinheit
- 19F"': Dosier- und Ventileinheit
- 20: Service-Gerät
- 21: Folienbeutel
- 21A: Sperrschicht
- 21 B: Kunststoff
- 22: Schutzbehälter
- 23: Raum
- 23A: Ventilationsöffnung
- 24: Entleerventil
- 25: Entleerkanal

## Patentansprüche

1. Vorrichtung zum Entleeren und Wederbefüllen einer Fahrzeugklimaanlage mittels eines Service-Gerätes, umfassend das für das Befüllen von Fahrzeugklimaanlagen mit Kältemittel/Kompressoröl-Gemisch bestimmte Service-Gerät sowie die Fahrzeugklimaanlage, wobei das Service-Gerät eine zum Entleeren und Wiederbefüllen der Fahrzeugklimaanlage und Verbinden des Service-Gerätes mit dem geschlossenen Kreislauf der Fahrzeugklimaanlage bestimmte Entleer- und einer Befülleinrichtung zum Absaugen des Kältemittel/Kompressoröl-Gemisches aus einer Fahrzeugklimaanlage (10) und zum Wiederauffüllen der Fahrzeugklimaanlage mit Kältemittel und Kompressoröl sowie
zumindest einen frisches Kompressorenöl, Additive oder dergleichen für das Wiederauffüllen der Fahrzeugklimaanlage enthaltenden Vorrats-Behälter (19C, 19D) aufweist,
**dadurch gekennzeichnet, dass**
der mindestens eine Vorratsbehälter (19C, 19D) aus einem Folienbeutel (21) zum Aufnehmen des Vorratsgutes und aus einem den Folienbeutel (21) umhüllenden Schutzbehälter (22) besteht, wobei die Wandung des Folienbeutels (21) aus einer mit einer Diffusionssperre versehenen Folie besteht, und der zwischen der Beutel-Außenseite und der Schutzbehälter-Innenseite verfügbare Raum (23) über mindestens eine Öffnung mit der Umgebungsatmosphäre oder mit einem anderen Gas in Strömungsverbindung steht.

2. Service-Gerät nach Anspruch 1, **gekennzeichnet durch** einen Entleerkanal innerhalb des Folienbeutels.

3. Service-Gerät nach Anspruch 2, **gekennzeichnet durch** einen einen Entleerkanal definierenden länglichen perforierten Körper.

4. Service-Gerät nach einem der Ansprüche 2 bis 3, **dadurch gekennzeichnet, dass** der Entleerkanal mittig innerhalb des Folienbeutels entlang dessen Längserstreckung angeordnet ist.

5. Service-Gerät nach einem der Ansprüche 2 bis 4, **dadurch gekennzeichnet, dass** der Entleerkanal eine spiralfederförmige oder gitterartige Wandung aufweist.

6. Vorratsbehälter für zumindest eines der Füllmedien des geschlossenen Kreislaufs von Fahrzeugklimaanlagen für die Verwendung in einem Service-Gerät zum Warten einer Fahrzeugklimaanlage (10) nach Anspruch 1,
**dadurch gekennzeichnet, dass**
der mindestens eine Vorratsbehälter (19C, 19D) aus einem Folienbeutel (21) zum Aufnehmen des Vorratsgutes und einem den Folienbeutel (21) umhüllenden Schutzbehälter (22) besteht, wobei die Wandung des Folienbeutels (21) aus einer mit einer Diffusionssperre versehenen Folie besteht, und der zwischen der Beutel-Außenseite und der Schutzbehälter-lnnenseite verfügbare Raum (23) über mindestens eine Öffnung mit der Umgebungsatmosphäre oder mit einem anderen Gas in Strömungsverbindung steht und dass innerhalb des Folienbeutels ein Entleerkanal mit einer spiralförmigen oder gitterartigen Wandung vorgesehen ist.

7. Service-Gerät oder Vorratsbehälter nach einem der Ansprüche 1 bis 6, **dadurch gekennzeichnet, dass** der Folienbeutel aus einem zumindest zweischichtigen Folienmaterial hergestellt ist, bei dem die eine Schicht aus zumindest einem Kunststoff und die andere Schicht aus zumindest einem Metall besteht.

8. Service-Gerät oder Vorratsbehälter nach einem der Ansprüche 1 bis 7, **gekennzeichnet durch** eine Wandstärke des Folienbeutels zwischen 2,0 und 0,02 mm, vorzugsweise zwischen 0,5 und 0,05 mm.

9. Verfahren zum Betreiben einer Vorrichtung nach Anspruch 1, bei dem
- ein Kreislaufgemisch aus Kältemittel, Kompressorenöl sowie gegebenenfalls-weiteren Gemischbestandteilen aus der Fahrzeugklimaanlage abgesaugt,
- das Kältemittel von dem abgesaugten Kreislaufgemisch getrennt und zumindest die Nicht-Kältemittelkomponente des Kreislaufgemisches gewichtsmäßig erfasst wird,
- frisches oder wiedergewonnenes Kältemittel, Kompressorenöl, sowie gegebenenfalls weitere Gemischbestandteile in den erforderlichen Mengen dem Kreislauf der Fahrzeugklimaanlage wieder zugeführt wird,
- zum Wiederauffüllen vom Kompressorenöl und gegebenenfalls weiteren Bestandteilen des Kreislaufgemisches aus zumindest einem Vorratsbehälter für Kompressorenöl und gegebenenfalls einen oder mehrere weitere Bestandteile des Kreislaufgemisches in den geschlossenen Kreislauf der Fahrzeugklimaanlage, das Kompressorenöl und gegebenenfalls die weiteren Bestandteile des Kreislaufgemisches aus einem Folienbeutel, zumindest bestehend aus einer mit einer Diffusionssperre versehenen Folie, unter Erfassen des Entnahmegewichtes und unter Kollabieren des Folienbeutels abgesaugt wird und
- in den Raum zwischen der Außenseite des Folienbeutels und der Innenseite eines den Folienbeutel umgebenden Schutzbehälters Umgebungsatmosphäre oder ein anderes Gas drucklos über geeignete Öffnungen des Schutzbehälters nachströmt.

10. Verfahren nach Anspruch 9, **gekennzeichnet durch** die Verwendung eines Folienbeutels als Vorratsbehälter nach einem der Ansprüche 6 bis 8.

## Claims

1. Apparatus for draining and refilling a vehicle air conditioning system by means of a service device, comprising the service device, which has the function of filling vehicle air conditioning systems with a coolant/compressor oil mixture, and the vehicle air conditioning system, said service device possessing a draining and filling device for extracting the coolant/compressor oil mixture from a vehicle air conditioning system (10) by suction and refilling the vehicle air conditioning system with coolant and compressor oil, said draining and filling device having the function of draining and refilling the vehicle air conditioning system and connecting the service device with the closed circuit of the vehicle air conditioning system, and at least one reservoir vessel containing fresh compressor oil, additives or similar for refilling the vehicle air conditioning system (19C, 19D), **characterised in that** the at least one reservoir vessel (19C, 19D) consists of a membrane pouch (21) for holding the stored contents and a protective container (22) enclosing the membrane pouch (21), the wall of said membrane pouch (21) consisting of a membrane provided with a diffusion barrier, and the space (23) available between the outer side of the pouch and the inner side of the protective container is connected, so as to allow flow, with the environmental atmosphere or with another gas via at least one opening.

2. Service device according to claim 1, **characterised by** a draining channel within the membrane pouch.

3. Service device according to claim 2, **characterised by** a longitudinally perforated body defining a draining channel.

4. Service device according to one of the claims 2 to 3, **characterised in that** the draining channel is arranged centrally within the membrane pouch along its longitudinal extension.

5. Service device according to one of the claims 2 to 4, **characterised in that** the draining channel possesses a helically-formed or lattice-like wall.

6. Reservoir vessel for at least one of the filling media of the closed circuit of vehicle air conditioning systems for use in a service device for servicing a vehicle air conditioning system (10) according to claim 1, **characterised in that** the at least one reservoir vessel (19C, 19D) consists of a membrane pouch (21) for holding the stored contents and a protective container (22) enclosing the membrane pouch (21), the wall of said membrane pouch (21) consisting of a membrane provided with a diffusion barrier, and the space (23) available between the outer side of the pouch and the inner side of the protective container is connected, so as to allow flow, with the surrounding atmosphere or with another gas via at least one opening, and that a draining channel with a helically-formed or lattice-like wall is provided within the membrane pouch.

7. Service device or reservoir vessel according to one of the claims 1 to 6, **characterised in that** the membrane pouch is manufactured of an at least two-layered membrane material, in which one layer consists of at least one plastic and the other layer consists of at least one metal.

8. Service device or reservoir vessel according to one of the claims 1 to 7, **characterised by** a wall thickness of the membrane pouch of between 2.0 and 0.02 mm, preferably between 0.5 and 0.05 mm.

9. Method for operating an apparatus according to claim 1, in which
- a circuit mixture consisting of coolant, compressor oil and possibly other mixture components is extracted from the vehicle air conditioning system by suction,
- the coolant is separated from the extracted circuit mixture and the weight of at least the non-coolant components of the circuit mixture is measured,
- fresh or recovered coolant, compressor oil and possibly other mixture components are fed back into the circuit of the vehicle air conditioning system in the necessary quantities,
- in order to refill compressor oil and possibly other components of the circuit mixture from at least one reservoir vessel for compressor oil and possibly one or more other components of the circuit mixture into the closed circuit of the vehicle air conditioning system, the compressor oil and possibly the other components of the circuit mixture is extracted by suction from a membrane pouch, at least consisting of a membrane provided with a diffusion barrier, with the weight of the removed quantity being measured, and so that the membrane pouch collapses, and
- environmental atmosphere or another gas flows, without pressure, into the space between the outer side of the pouch and the inner side of a protective container enclosing the membrane pouch via suitable openings in the protective container.

10. Method according to claim 9, **characterised by** the use of a membrane pouch as reservoir vessel according to one of the claims 6 to 8.

## Revendications

1. Dispositif pour vider et remplir de nouveau une installation de climatisation de véhicule à l'aide d'un appareil d'entretien,
dispositif comprenant :
l'appareil d'entretien pour remplir l'installation de climatisation avec un mélange d'agent frigorifique/huile de compresseur et l'installation de climatisation du véhicule,
l'appareil d'entretien comportant :
- une installation de vidage et une installation de remplissage pour vider et remplir de nouveau l'installation de climatisation du véhicule et relier l'appareil d'entretien au circuit fermé de l'installation de climatisation, pour prélever le mélange agent frigorifique/huile de compresseur de l'installation de climatisation de véhicule (10) et la remplir de nouveau avec de l'agent frigorifique et de l'huile de compresseur, et
- au moins un réservoir (19C, 19D) contenant de l'huile de compresseur neuve, des additifs ou autres additifs pour remplir de nouveau l'installation de climatisation du véhicule,
dispositif **caractérisé en ce qu'**
au moins le réservoir (19C, 19D) se compose d'une poche formée d'un film (21) contenant le produit et d'un récipient protecteur (22) entourant la poche (21), la paroi de la poche (21) étant constituée d'un film avec une barrière de diffusion et l'espace (23) subsistant entre le côté extérieur de la poche et le côté intérieur du récipient protecteur est relié par au moins un orifice à l'atmosphère ambiante ou communique avec un autre gaz.

2. Appareil d'entretien selon la revendication 1,
**caractérisé par**
un canal d'évacuation à l'intérieur de la poche formée d'un film.

3. Appareil d'entretien selon la revendication 2,
**caractérisé par**
un corps perforé, allongé, définissant un canal d'évacuation.

4. Appareil d'entretien selon l'une des revendications 2 et 3,
**caractérisé en ce que**
le canal d'évacuation est au milieu de la longueur de la poche.

5. Appareil d'entretien selon l'une des revendications 2 à 4,
**caractérisé en ce que**
le canal d'évacuation a une forme de ressort hélicoïdal ou de paroi en forme de grille.

6. Réservoir pour recevoir au moins un milieu de remplissage du circuit fermé d'une installation de climatisation de véhicule destiné à être utilisé dans un appareil d'entretien pour assurer l'entretien d'une installation de climatisation de véhicule (10) selon la revendication 1, réservoir **caractérisé en ce qu'**
au moins le réservoir (19C, 19D,...) se compose d'une poche formée d'un film (21) pour recevoir le produit et d'un récipient protecteur (22) entourant la poche (21),
la paroi de la poche (21) étant formée d'un film muni d'une barrière de diffusion et l'intervalle (23) qui subsiste entre le côté extérieur de la poche et le côté intérieur du récipient protecteur, est relié par au moins un orifice à l'atmosphère ambiante ou communique avec un gaz et à l'intérieur de la poche, il est prévu un canal d'évacuation.

7. Appareil d'entretien ou réservoir selon l'une des revendications 1 à 6,
**caractérisé en ce que**
la poche est réalisée en un film à au moins deux couches et dont une couche est en au moins une matière plastique et l'autre couche en au moins un métal.

8. Appareil d'entretien ou réservoir selon l'une des revendications 1 à 7,
**caractérisé en ce que**
l'épaisseur de la paroi de la poche est comprise entre 2,0 et 0,02 mm et de préférence entre 0,5 et 0,05 mm.

9. Procédé de gestion d'un dispositif selon la revendication 1, dans lequel
- on aspire le mélange contenu dans un circuit et se composant d'un agent frigorifique, d'huile de compresseur et le cas échéant, d'autres additifs dans une installation de climatisation de véhicule,
- on sépare l'agent frigorifique du mélange aspiré et on saisit au moins les composants qui ne sont pas des agents frigorifiques du mélange provenant du circuit en procédant par pondération,
- on fournit de l'agent frigorifique frais ou récupéré, de l'huile de compresseur et le cas échéant d'autres composants de mélange en quantité appropriée au circuit de l'installation de climatisation du véhicule,
- on remplit de nouveau avec de l'huile de compresseur et le cas échéant d'autres constituants du mélange du circuit à partir d'au moins un réservoir contenant de l'huile de compresseur et le cas échéant, un ou plusieurs autres constituants du mélange du circuit circulant en boucle fermée dans l'installation de climatisation du véhicule, l'huile de compresseur et le cas échéant les autres constituants du mélange du circuit étant aspirés dans une poche composée au moins d'un film muni d'une barrière de diffusion, en détectant le poids prélevé et en aspirant dans la poche qui s'affaisse, et
- dans l'espace entre le côté extérieur de la poche et la paroi intérieure du récipient protecteur entourant la poche reçoit, l'air atmosphérique ou un autre gaz est fourni sans pression par des orifices appropriés réalisés dans le récipient protecteur.

10. Procédé de gestion d'un dispositif selon la revendication 9,
**caractérisé par**
l'utilisation d'une poche comme réservoir selon l'une des revendications 6 à 8.
